# EUROPEAN PATENT SPECIFICATION

(11) **EP 4 253 245 B1**
(45) Date of publication and mention of the grant of the patent: **29.04.2026**
(21) Application number: 23165645.5
(22) Date of filing: 30.03.2023
(51) Int. Cl.: B64D 15/16, B64F 5/60

(54) **SYSTEMS AND METHODS FOR GAS GENERATOR FOR PNEUMATIC DEICER**
SYSTEME UND VERFAHREN FÜR EINEN GASGENERATOR FÜR PNEUMATISCHEN ENTEISER
SYSTÈMES ET PROCÉDÉS POUR GÉNÉRATEUR DE GAZ POUR DÉGIVREUR PNEUMATIQUE

(30) Priority: 30.03.2022 IN 202241018919; 01.07.2022 US 202217856334
(43) Date of publication of application: 04.10.2023
(73) Proprietor: Goodrich Corporation, Charlotte, NC 28217-4578 (US)
(72) Inventor: SHIVAPRAKASH gowda, Anagha, 560062 Bangalore, KA (IN); SELVARAJ, Sugumaran, 560067 Bangalore, Karnataka (IN)
(74) Representative: Dehns

(56) References cited:
- EP-A1- 3 242 004
- EP-A1- 3 335 992
- EP-A1- 3 738 884
- WO-A1-2015/059427
- GB-A- 2 167 723
- US-A1- 2018 105 277

## Description

### FIELD

This disclosure relates generally to pneumatic deicers for aircraft, more specifically, gas generators for pneumatic deicers.

### BACKGROUND

Pneumatic deicing boots are a type of ice protection system installed to aircraft surfaces to permit deicing in flight. The deicing boots may consist of thick rubber membranes installed to the leading edge of a wing. As atmospheric icing occurs and ice builds up, the pneumatic deicing boot may inflate. Pneumatic deicing boots typically rely on compressed air for inflation. Cooled bleed air may be used to inflate the deicing boots (see e.g. the disclosure of document EP 3 738 884 A1). A gas generator is disclosed in EP 3 242 004 A1.

### SUMMARY

A pneumatic deicing system is provided as defined by claim 1.

In various embodiments, the gas generator may further comprise a residual collector. In various embodiments, the residual collector may be coupled to the combustion chamber. In various embodiments, the gas generator may be electrically coupled to a power supply. In various embodiments, the power supply may be configured to send an electric pulse into the gas generator.

In various embodiments, the propellant may be a sodium-based propellant. The propellant may be configured to be transferred from the propellant storage unit to the combustion chamber. In various embodiments, the propellant may be configured to decompose in response to the electric pulse passing through the propellant. In various embodiments, the decomposed propellant may be configured to be liberated as a high pressure gas. In various embodiments, the high pressure gas may be a high pressure nitrogen gas. In various embodiments, the gas generator may be configured to direct the high pressure gas from the combustion chamber to the deicing boot assembly. In various embodiments, the deicing boot assembly may comprise a deicing boot, wherein the deicing boot may be coupled to a leading edge of an aircraft wing. In various embodiments, the deicing boot may comprise a plurality of ridges.

A gas generator is also described (but not claimed).

In various examples, the propellant storage unit may further comprise a propellant. The propellant may be configured to be transferred from the propellant storage unit to the combustion chamber. In various embodiments, the ignitor may be configured to contact the propellant. The propellant may be a sodium-based propellant.

In various examples, the gas generator may further comprise a power supply. The power supply may be configured to send an electric pulse into the gas generator. In various embodiments, the ignitor may be configured to supply the electric pulse to the propellant. In various embodiments, the electric pulse may be configured to pass through the propellant. In various embodiments, the propellant may be configured to decompose in response to the electric pulse passing through the propellant. In various embodiments, the decomposed propellant may be configured to be liberated as a high pressure gas. In various embodiments, the gas generator may be configured to expel the high pressure gas. In various embodiments, the high pressure gas may be a high pressure nitrogen gas.

A method for testing a pneumatic deicing system is provided as defined by claim 9.

In various embodiments, testing the gas generator may comprise the propellant storage unit comprising a propellant, wherein the propellant may be a sodium-based propellant.

In various embodiments, the generating may further comprise transferring the propellant from the propellant storage unit to the combustion chamber, wherein the ignitor may be configured to contact the propellant. In various embodiments, the generating may further comprise sending an electric pulse from the power supply and into the gas generator. In various embodiments, the generating may further comprise supplying, by the ignitor, the electric pulse to the propellant. In various embodiments, the generating may further comprise passing the electric pulse through the propellant. In various embodiments, the generating may further comprise decomposing the propellant in response to the electric pulse passing through the propellant. In various embodiments, the decomposing may further comprise liberating the decomposed propellant as the high pressure gas. In various embodiments, the inflating may further comprise directing the high pressure gas to the deicing boot. In various embodiments, the inflating may further comprise inflating the deicing boot with the high pressure gas. In various embodiments, the high pressure gas may be nitrogen gas.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates an aircraft, in accordance with various embodiments;
FIG. 2 illustrates an aircraft wing, in accordance with various embodiments;
FIG. 3A illustrates a deicing boot in an idle position, in accordance with various embodiments;
FIG. 3B illustrates a deicing boot in an engaged position, in accordance with various embodiments;
FIG. 4 illustrates gas generator and a deicing boot assembly, in accordance with various embodiments;
FIG. 5 illustrates a method for testing a pneumatic deicing system, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein, provided they fall within the scope of the invention as defined by the claims. Thus, the detailed description herein is presented for purposes of illustration only and not of limitation.

The scope of the disclosure is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

An aircraft must be pushed through the air to generate lift. Aircraft wings may generate most of the lift associated with holding the aircraft in the air. Accordingly, aircraft wings may be shaped as an airfoil. An airfoil may be a cross-sectional shape of an object whose motion through a gas is capable of generating lift. The air may resist aircraft motion in the form of aerodynamic drag. Turbine engines may provide thrust to overcome drag and push the aircraft forward. A wing's aerodynamic efficiency may be expressed as a lift-to-drag ratio. A high lift-to-drag ratio may be associated with a smaller thrust to propel the wings through the air at sufficient lift, and vice versa.

Ice formation on a leading edge of a wing may disrupt or destroy the smooth flow of air along the wing, increasing drag while decreasing the ability of the wing to create lift. Accordingly, ice formation on the leading edge of a wing may prevent an aircraft from taking off, or worse, may interfere with flight. Pneumatic deicing boots may be installed along the leading edges of aircraft wings. These deicing boots may be inflated with compressed air, cracking the ice along the leading edge, and permitting the ambient air or airflow to discharge the ice from the leading edge.

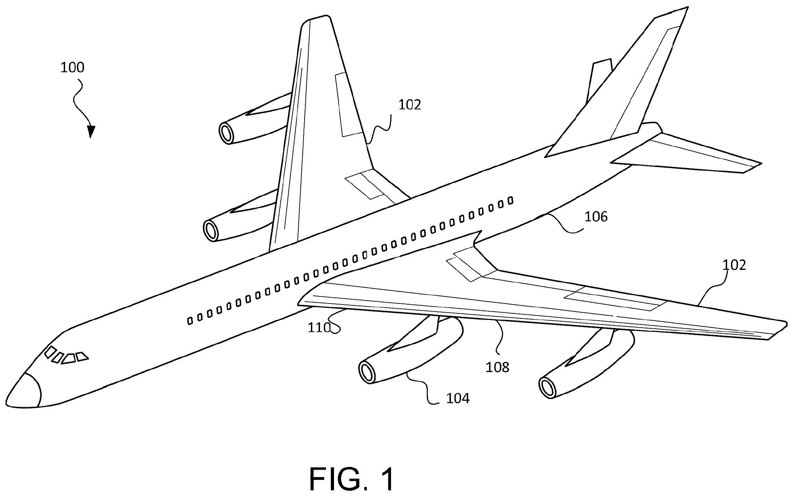

Referring to FIG. 1, an aircraft 100 is shown in accordance with various embodiments. The aircraft 100 may comprise wings 102 to generate lift, turbine engines 104 to provide thrust, and a fuselage 106 to hold the aircraft components together and carry passenger and cargo. The aircraft wings 102 may further comprise a pneumatic deicing assembly 108 along the leading edges 110 of the wings.

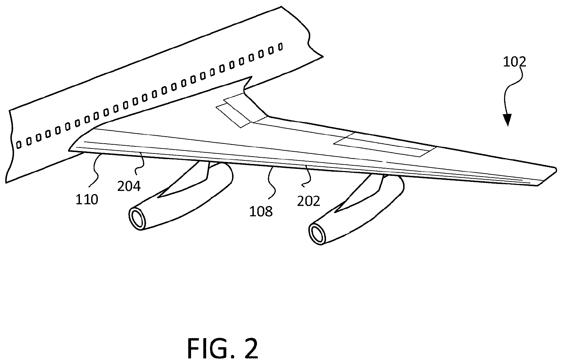

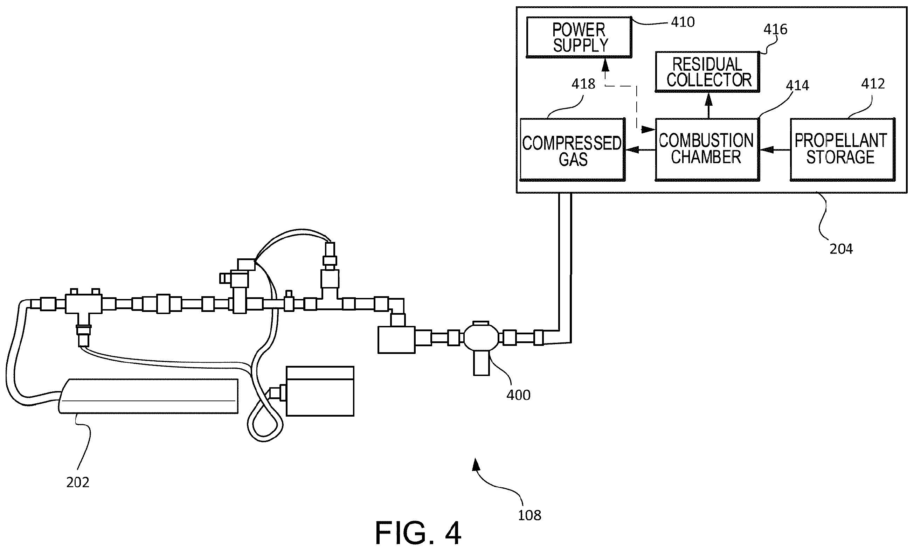

Referring to FIG. 2, the aircraft wing 102 is shown in accordance with various embodiments. In various embodiments, the wing 102 may comprise the pneumatic deicing assembly 108. The pneumatic deicing assembly 108 may comprise a deicing boot 202. The deicing boot 202 may be disposed along the leading edge 110 of the wing 102. In various embodiments, the assembly 108 may comprise a pressure regulator (FIG. 4, reference numeral 400) fluidly coupled to an air source such as, for example, a gas generator 204.

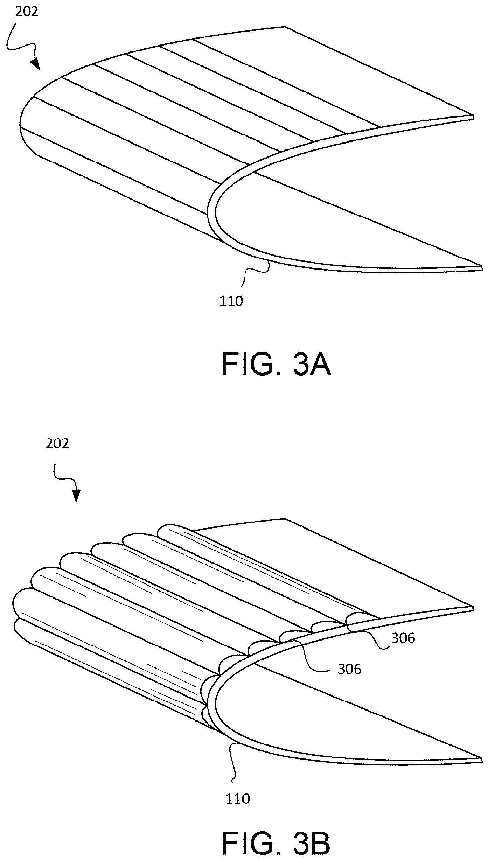

Portions of a cross-section of the deicing boot 202 are shown in FIGS. 3A and 3B. Specifically, FIG. 3A shows the deicing boot 202 in an idle position. The deicing boot may be installed along the leading edge 110 (FIG. 1) of the wing 102. In various embodiments, the deicing boot 202 may be installed along the leading edge of various control surfaces of the aircraft, such as, for example, horizontal and vertical stabilizers. The deicing boot 202 may be comprised of a rubber membrane. The rubber membrane of a deicing boot 202 may be comprised of natural rubber, neoprene rubber, nitrile rubber, silicone rubber, EPDM rubber, and the like.

FIG. 3B shows the deicing boot 202 in an engaged, or inflated, position. In various embodiments, the aircraft 100 (FIG. 1) may detect ice formation along the leading edge 110. Compressed gas may then be directed to the deicing boot 202 to inflate the deicing boot 202. As shown, the inflated deicing boot 202 may comprise a plurality of ridges 306. The geometry of these ridges 306, when inflated, may enable the ice to crack and dislodge from the leading edge 110. The ice may then be blown away by the airflow. The deicing boot 202 may then return to the idle position shown in FIG. 3A, returning the leading edge 110 to its optimal shape.

Referring to FIG. 4, the gas generator 204 and the deicing boot assembly 108 are shown in accordance with various embodiments. The gas generator 204 may be disposed within the wing structure, protecting the gas generator 204. In various embodiments, the gas generator 204 may be placed at any location suitable for the preferred design of an aircraft 100. In various embodiments, the gas generator 204 may be electrically coupled to a power supply 410. The power supply 410 may be, for example, the aircraft auxiliary power unit (APU), engine power, generators, and the like. In various embodiments, the power supply 410 may send an electric pulse into the gas generator 204.

In various embodiments, the gas generator 204 may comprise a propellant storage unit 412. In various embodiments, the gas generator 204 may comprise a propellant. The propellant may be solid and lightweight, enabling the gas generator 204 to be a compact system. The propellant may be packed into the propellant storage unit 412 by any suitable configuration preferred for aircraft design. The propellant may be sodium-based propellant. For example, the propellant may be sodium azide, guanidine nitrate, 5-aminotetrazole, bitetrazole dihydrate, nitroimidazole, basic copper nitrate, and the like. The propellant storage unit 412 may store the propellant until commencement of a deicing cycle.

In various embodiments, the gas generator may further comprise a combustion chamber 414. In various embodiments, the propellant may be transferred from the propellant storage unit 412 to the combustion chamber 414. As the electric pulse passes through the combustion chamber 414, the propellant may decompose in response to the electric pulse passing through the propellant. Accordingly, the decomposed propellant may be liberated as a high pressure gas 418 within the combustion chamber 414. In various embodiments, the high pressure gas 418 may be a high pressure nitrogen gas. In various embodiments, the gas generator 204 may further comprise a residual collector 416. The residual collector 416 may collect excess liberated gas that is not directed to the deicing boot 202. In various embodiments, the gas generator 204 may expel the high pressure gas 418. In various embodiments, the gas generator 204 may direct the high pressure gas 418 from the combustion chamber 414 to the deicing boot assembly 108, which may further direct the high pressure gas 418 to the deicing boot 202, inflating the deicing boot 202 with the chemically generated high pressure gas. The gas generator 204 may be fluidly coupled to the pressure regulator 400 of the deicing boot assembly 108 by a tube, channel, pipe, duct, and the like. The deicing boot assembly 108 may comprise additional components, such as, for example, controllers, pressure regulators, ejector flow control valves, flow control valves, water separators, check valves, isolations valves, pressure switches, and like components that may enable directing gas to the deicing boot 202.

There may be several benefits in utilizing chemically generated gas to inflate deicing boots. First, inflating deicing boots with chemically generated gas may reduce the aircraft's dependence on engine bleed air. Engine bleed air is compressed air taken from the compressor stage of a gas turbine upstream of its fuel-burning sections. Bleed air may be used for a variety of purposes on an aircraft, such as, for example, cabin pressurization, cross-starting another engine, engine cooling, pressurizing hydraulic reservoirs, and the like. Reducing reliance on bleed air for deicing may enable bleed air to be diverted to other useful purposes on the aircraft. Moreover, a chemical generation system may enable deicing boots to be adapted for electric propulsion aircraft, which could not rely on the bleed air generated from gas turbine engines.

Gas generation in a chemical generation system may also occur on an as-needed basis, burning low-cost propellant compounds that have long storage lives. For example, the gas generator may not need to decompose the entire propellant for a given deicing cycle. Moreover, the gas generator may not need to direct all of the liberated compressed gas to the deicing boot. For example, the gas generator may direct some of the liberated gas to the residual collector to be stored. Additionally, the gas generator may not require high amounts of solid propellant to be stored. For example, the gas generator may generate up to 1 Liter (0.22 imperial gallons) of gas from 2 grams (0.07 Ounces) of solid propellant. Nitrogen gas may also be an eco-friendly alternative to traditional bleed air.

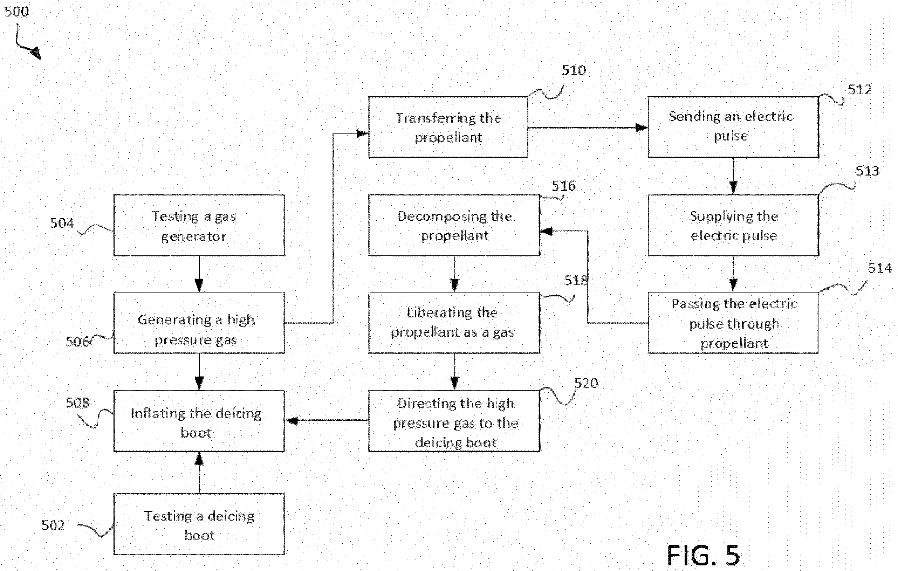

FIG. 5 illustrates a method (step 500) for testing a pneumatic deicing system, in accordance with various embodiments. The method (step 500) may comprise testing (step 502) a deicing boot assembly. In various embodiments, the method (step 500) may comprise testing (step 504) a gas generator coupled to the deicing boot assembly. In various embodiments, the gas generator may further comprise a propellant storage unit. In various embodiments, the gas generator may comprise a combustion chamber. In various embodiments, the combustion chamber may further comprise an ignitor. In various embodiments, the gas generator may comprise a residual collector. In various embodiments, the gas generator may comprise a power supply. In various embodiments, testing the gas generator (step 504) may further comprise generating (step 506) a high pressure gas. In various embodiments, testing the deicing boot assembly (step 502) may comprise inflating (step 508) a deicing boot of the deicing boot assembly.

In various embodiments, testing the gas generator (step 504) may comprise the propellant storage unit comprising a propellant, wherein the propellant may be a sodium-based propellant.

In various embodiments, the generating (step 506) may further comprise transferring (step 510) the propellant from the propellant storage unit to the combustion chamber, wherein the ignitor may contact the propellant. In various embodiments, the generating (step 506) may further comprise sending (step 512) an electric pulse from the power supply and into the gas generator. In various embodiments, the generating (step 506) may further comprise supplying (step 513) by the ignitor, the electric pulse to the propellant. In various embodiments, the generating (step 506) may further comprise passing (step 514) the electric pulse through the propellant. In various embodiments, the generating (step 506) may further comprise decomposing (step 516) the propellant in response to the electric pulse passing through the propellant. In various embodiments, the decomposing may further comprise liberating (step 518) the decomposed propellant as the high pressure gas. In various embodiments, the inflating (step 508) may further comprise directing (step 520) the high pressure gas to the deicing boot assembly. In various embodiments, the inflating (step 508) may further comprise inflating the deicing boot with the high pressure gas, wherein the high pressure gas may be nitrogen gas.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments within the scope of the claims.

## Claims

1. A pneumatic deicing system, comprising:
a deicing boot assembly (108), wherein the deicing boot assembly comprises a pneumatic deicing boot (202); and **characterised by**:
a gas generator (204) fluidly coupled to a pressure regulator (400) of the deicing boot assembly, wherein the gas generator comprises a propellant storage unit (412).

2. The pneumatic deicing system of claim 1, wherein the propellant storage unit comprises a propellant.

3. The pneumatic deicing system of claim 2, wherein the gas generator further comprises a combustion chamber (414), wherein the combustion chamber further comprises an ignitor, wherein the ignitor is configured to contact the propellant, wherein the ignitor is configured to supply an electric pulse to the propellant, wherein the electric pulse is configured to pass through the propellant.

4. The pneumatic deicing system of claim 3, wherein the gas generator further comprises a residual collector (416), wherein the residual collector is coupled to the combustion chamber.

5. The pneumatic deicing system of claim 4, wherein the gas generator is electrically coupled to a power supply, wherein the power supply is configured to send an electric pulse into the gas generator.

6. The pneumatic deicing system of claim 5, wherein the propellant is a sodium-based propellant, wherein the propellant is configured to be transferred from the propellant storage unit to the combustion chamber, wherein the propellant is configured to decompose in response to the electric pulse passing through the propellant, wherein the decomposed propellant is configured to be liberated as a high pressure gas; and optionally wherein the high pressure gas is a high pressure nitrogen gas, wherein the gas generator is configured to direct the high pressure gas from the combustion chamber to the deicing boot assembly.

7. The pneumatic deicing system of any preceding claim, wherein the deicing boot is configured to be coupled to a leading edge (110) of an aircraft wing

8. The pneumatic deicing system of any preceding claim, wherein the deicing boot of the deicing boot assembly further comprises a plurality of ridges (306).

9. A method for testing a pneumatic deicing system, comprising:
testing a deicing boot assembly (108); and
testing a gas generator (204) coupled to the deicing boot assembly, wherein the gas generator further comprises:
a propellant storage unit (412);
a combustion chamber (414), wherein the combustion chamber further comprises an ignitor;
a residual collector (416); and
a power supply,
wherein testing the gas generator further comprises generating a high pressure gas, wherein testing the deicing boot assembly further comprises inflating a deicing boot of the deicing boot assembly.

10. The method of claim 9, wherein testing the gas generator comprises the propellant storage unit comprising a propellant, wherein the propellant is a sodium-based propellant, an optionally wherein the generating further comprises transferring the propellant from the propellant storage unit to the combustion chamber, wherein the ignitor is configured to contact the propellant.

11. The method of 10, wherein the generating further comprises sending an electric pulse from the power supply and into the gas generator, wherein the generating further comprises supplying, by the ignitor, the electric pulse to the propellant, wherein the generating further comprises passing the electric pulse through the propellant; and optionally wherein the generating further comprises decomposing the propellant in response to the electric pulse passing through the propellant, wherein the decomposing further comprises liberating the decomposed propellant as the high pressure gas.

12. The method of claim 11, wherein the inflating further comprises directing the high pressure gas to the deicing boot, and optionally wherein the inflating further comprises inflating the deicing boot with the high pressure gas, wherein the high pressure gas is nitrogen gas.

## Patentansprüche

1. Pneumatisches Enteisungssystem, umfassend:
eine Enteisungsmanschettenbaugruppe (108), wobei die Enteisungsmanschettenbaugruppe eine pneumatische Enteisungsmanschette (202) umfasst; und **gekennzeichnet durch**:
einen Gasgenerator (204), der fluidisch mit einem Druckregler (400) der Enteisungsmanschettenbaugruppe gekoppelt ist, wobei der Gasgenerator eine Treibmittelspeichereinheit (412) umfasst.

2. Pneumatisches Enteisungssystem nach Anspruch 1, wobei die Treibmittelspeichereinheit ein Treibmittel umfasst.

3. Pneumatisches Enteisungssystem nach Anspruch 2, wobei der Gasgenerator ferner eine Brennkammer (414) umfasst, wobei die Brennkammer ferner einen Zünder umfasst, wobei der Zünder konfiguriert ist, um das Treibmittel zu kontaktieren, wobei der Zünder konfiguriert ist, um dem Treibmittel einen elektrischen Impuls zuzuführen, wobei der elektrische Impuls konfiguriert ist, um durch das Treibmittel hindurchzutreten.

4. Pneumatisches Enteisungssystem nach Anspruch 3, wobei der Gasgenerator ferner einen Rückstandssammler (416) umfasst, wobei der Rückstandssammler mit der Brennkammer gekoppelt ist.

5. Pneumatisches Enteisungssystem nach Anspruch 4, wobei der Gasgenerator elektrisch mit einer Stromversorgung gekoppelt ist, wobei die Stromversorgung konfiguriert ist, um einen elektrischen Impuls in den Gasgenerator zu senden.

6. Pneumatisches Enteisungssystem nach Anspruch 5, wobei das Treibmittel ein natriumbasiertes Treibmittel ist, wobei das Treibmittel konfiguriert ist, um von der Treibmittelspeichereinheit zu der Brennkammer übertragen zu werden, wobei das Treibmittel konfiguriert ist, um sich als Reaktion darauf, dass der elektrische Impuls durch das Treibmittel hindurchtritt, zu zersetzen, wobei das zersetzte Treibmittel konfiguriert ist, um als ein Hochdruckgas freigesetzt zu werden; und wobei optional das Hochdruckgas ein Hochdruckstickstoffgas ist, wobei der Gasgenerator konfiguriert ist, um das Hochdruckgas von der Brennkammer zu der Enteisungsmanschettenbaugruppe zu leiten.

7. Pneumatisches Enteisungssystem nach einem der vorhergehenden Ansprüche, wobei die Enteisungsmanschette konfiguriert ist, um an eine Vorderkante (110) eines Luftfahrzeugflügels gekoppelt zu werden.

8. Pneumatisches Enteisungssystem nach einem der vorhergehenden Ansprüche, wobei die Enteisungsmanschette der Enteisungsmanschettenbaugruppe ferner eine Vielzahl von Rippen (306) umfasst.

9. Verfahren zum Testen eines pneumatischen Enteisungssystems, umfassend:
Testen einer Enteisungsmanschettenbaugruppe (108); und
Testen eines Gasgenerators (204), der mit der Enteisungsmanschettenbaugruppe gekoppelt ist, wobei der Gasgenerator ferner umfasst:
eine Treibmittelspeichereinheit (412);
eine Brennkammer (414), wobei die Brennkammer ferner einen Zünder umfasst;
einen Rückstandssammler (416); und
eine Stromversorgung,
wobei das Testen des Gasgenerators ferner das Generieren eines Hochdruckgases umfasst, wobei das Testen der Enteisungsmanschettenbaugruppe ferner das Aufblasen einer Enteisungsmanschette der Enteisungsmanschettenbaugruppe umfasst.

10. Verfahren nach Anspruch 9, wobei das Testen des Gasgenerators umfasst, dass die Treibmittelspeichereinheit ein Treibmittel umfasst, wobei das Treibmittel ein natriumbasiertes Treibmittel ist, und wobei optional das Generieren ferner das Übertragen des Treibmittels von der Treibmittelspeichereinheit zu der Brennkammer umfasst, wobei der Zünder konfiguriert ist, um das Treibmittel zu kontaktieren.

11. Verfahren nach Anspruch 10, wobei das Generieren ferner das Senden eines elektrischen Impulses von der Stromversorgung und in den Gasgenerator umfasst, wobei das Generieren ferner das Zuführen des elektrischen Impulses durch den Zünder zu dem Treibmittel umfasst, wobei das Generieren ferner das Leiten des elektrischen Impulses durch das Treibmittel umfasst; und wobei optional das Generieren ferner das Zersetzen des Treibmittels als Reaktion darauf umfasst, dass der elektrische Impuls durch das Treibmittel hindurchtritt, wobei das Zersetzen ferner das Freisetzen des zersetzten Treibmittels als das Hochdruckgas umfasst.

12. Verfahren nach Anspruch 11, wobei das Aufblasen ferner das Leiten des Hochdruckgases zu der Enteisungsmanschette umfasst, und wobei optional das Aufblasen ferner das Aufblasen der Enteisungsmanschette mit dem Hochdruckgas umfasst, wobei das Hochdruckgas Stickstoffgas ist.

## Revendications

1. Système de dégivrage pneumatique, comprenant :
un ensemble de boudin de dégivrage (108), l'ensemble de boudin de dégivrage comprenant un boudin de dégivrage pneumatique (202) ; et **caractérisé par** :
un générateur de gaz (204) en communication fluidique avec un régulateur de pression (400) de l'ensemble de boudin de dégivrage, dans lequel le générateur de gaz comprend une unité de stockage de propergol (412).

2. Système de dégivrage pneumatique selon la revendication 1, dans lequel l'unité de stockage de propergol comprend un propergol.

3. Système de dégivrage pneumatique selon la revendication 2, dans lequel le générateur de gaz comprend en outre une chambre de combustion (414), la chambre de combustion comprenant en outre un allumeur, l'allumeur étant configuré pour entrer en contact avec le propergol, l'allumeur étant configuré pour fournir une impulsion électrique au propergol, l'impulsion électrique étant configurée pour traverser le propergol.

4. Système de dégivrage pneumatique selon la revendication 3, dans lequel le générateur de gaz comprend en outre un collecteur de résidus (416), le collecteur de résidus étant accouplé à la chambre de combustion.

5. Système de dégivrage pneumatique selon la revendication 4, dans lequel le générateur de gaz est relié électriquement à une alimentation électrique, l'alimentation électrique étant configurée pour envoyer une impulsion électrique dans le générateur de gaz.

6. Système de dégivrage pneumatique selon la revendication 5, dans lequel le propergol est un propergol à base de sodium, dans lequel le propergol est configuré pour être transféré de l'unité de stockage de propergol à la chambre de combustion, dans lequel le propergol est configuré pour se décomposer en réponse à l'impulsion électrique qui le traverse, dans lequel le propergol décomposé est configuré pour être libéré sous forme de gaz à haute pression ; et éventuellement dans lequel le gaz à haute pression est de l'azote gazeux à haute pression, dans lequel le générateur de gaz est configuré pour diriger le gaz à haute pression de la chambre de combustion vers l'ensemble de boudin de dégivrage.

7. Système de dégivrage pneumatique selon une quelconque revendication précédente, dans lequel le boudin de dégivrage est configuré pour être accouplé à un bord d'attaque (110) d'une aile d'aéronef

8. Système de dégivrage pneumatique selon une quelconque revendication précédente, dans lequel le boudin de dégivrage de l'ensemble de boudin de dégivrage comprend en outre une pluralité de crêtes (306).

9. Procédé de test de système de dégivrage pneumatique, comprenant :
le test d'un ensemble de boudin de dégivrage (108) ; et
le test d'un générateur de gaz (204) accouplé à l'ensemble de boudin de dégivrage, le générateur de gaz comprenant en outre :
une unité de stockage de propergol (412) ;
une chambre de combustion (414), la chambre de combustion comprenant en outre un allumeur ;
un collecteur de résidus (416) ; et
une alimentation électrique,
dans lequel le test du générateur de gaz comprend en outre la génération d'un gaz à haute pression, le test de l'ensemble de boudin de dégivrage comprenant en outre le gonflage d'un boudin de dégivrage de l'ensemble de boudin de dégivrage.

10. Procédé selon la revendication 9, dans lequel le test du générateur de gaz comprend l'unité de stockage de propergol comprenant un propergol, dans lequel le propergol est un propergol à base de sodium, et éventuellement dans lequel la génération comprend en outre le transfert du propergol de l'unité de stockage de propergol à la chambre de combustion, l'allumeur étant configuré pour entrer en contact avec le propergol.

11. Procédé selon la revendication 10, dans lequel la génération comprend en outre l'envoi d'une impulsion électrique depuis l'alimentation électrique vers le générateur de gaz, dans lequel la génération comprend en outre la fourniture, par l'allumeur, de l'impulsion électrique au propergol, dans lequel la génération comprend en outre le passage de l'impulsion électrique à travers le propergol ; et éventuellement dans lequel la génération comprend la décomposition du propergol en réponse au passage de l'impulsion électrique à travers le propergol, dans lequel la décomposition comprend en outre la libération du propergol décomposé sous forme de gaz à haute pression.

12. Procédé selon la revendication 11, dans lequel le gonflage comprend en outre la direction du gaz à haute pression vers le boudin de dégivrage, et éventuellement dans lequel le gonflage comprend en outre le gonflage du boudin de dégivrage avec le gaz à haute pression, le gaz à haute pression étant de l'azote.
